# EUROPEAN PATENT APPLICATION

(11) **EP 4 848 421 A1**
(43) Date of publication of application: **02.12.2026**
(21) Application number: 25901589.9
(22) Date of filing: 05.11.2025
(51) Int. Cl.: H01M 50/152, H01M 50/159, H01M 50/276, H01M 10/655, H01M 50/249

(54) **BOTTOM COVER, BATTERY PACK, AND VEHICLE**

(30) Priority: 05.12.2024 KR 20240179361
(71) Applicant: LG Energy Solution, Ltd., Seoul 07335 (KR)
(72) Inventor: JEONG, Euicheol, Daejeon 34122 (KR); YOON, Inse, Daejeon 34122 (KR); CHUNG, Jaehun, Daejeon 34122 (KR); YANG, Jinoh, Daejeon 34122 (KR); JANG, Jaeyoung, Daejeon 34122 (KR); CHOI, Taewoong, Daejeon 34122 (KR)
(74) Representative: Goddar, Heinz J.
(86) International application number: PCT/KR2025/018046
(87) International publication number: WO 2026/121594

(57) **Abstract**

A bottom cover according to the present invention is for supporting one bottom surface of a battery cell, and the bottom cover includes a flat cover lower portion and a cover upper portion having a raised pattern formed thereon, facing one bottom surface of the battery cell and protruding in a direction of the battery cell.

## Description

### [TECHNICAL FIELD]

The present invention relates to a bottom cover supporting one bottom surface of a battery cell, a battery pack including the same, and a vehicle.

### [BACKGROUND ART]

Secondary batteries, unlike primary batteries which are non-rechargeable, are rechargeable batteries capable of charge and discharge cycles. They are widely utilized not only in portable electronic devices but also in electric vehicles (EVs) and hybrid electric vehicles (HEVs) driven by electric power sources.

These secondary batteries are attracting attention as a new energy source for promoting environmental friendliness and energy efficiency because they not only have the primary advantage of drastically reducing the use of fossil fuels, but also have the advantage of producing no byproducts from energy use.

Types of secondary batteries widely used today include lithium-ion batteries, lithium polymer batteries, nickel-cadmium batteries, nickel-hydrogen batteries, and nickel-zinc batteries. The operating voltage of a single secondary battery cell, i.e., a unit battery cell, is approximately 2.5 V to 4.5 V. Therefore, when a higher output voltage is required, the battery pack may be configured by electrically connecting a plurality of battery cells in series. In addition, a battery pack may be configured by connecting a plurality of battery cells in parallel depending on the charge/discharge capacity requirements. Accordingly, the number of battery cells included in the battery pack and the type of electrical connection thereof may be variously set depending on the required output voltage and the total charge/discharge capacity.

Meanwhile, as types of unit secondary battery cells, cylindrical, prismatic, and pouch-type battery cells are known. In the case of a cylindrical battery cell, an insulating separator is disposed between the positive and negative electrodes, and the electrodes and separator are wound to form a jelly-roll-type electrode assembly, which is then accommodated within a cylindrical battery case to constitute the battery cell. Furthermore, current collectors may be connected to the uncoated portions of the positive and negative electrodes, and the current collectors electrically connect the electrode assembly with electrode terminals exposed to the outside of the cell. Additionally, an electrolyte that enables the movement of lithium ions is injected into the inside of the battery case. Further, a battery cap is coupled to one side of the battery case to prevent leakage of the electrolyte and separation of the electrode assembly. In this case, a sealing gasket is interposed between the battery case and the battery cap to maintain electrical insulation therebetween, and to prevent not only leakage of the electrolyte but also ingress of moisture.

Additionally, the cylindrical battery cell can connect the positive and negative electrodes of the electrode assembly to the outside through various structures. For example, a battery cap covering one bottom surface of the battery can may function as a positive terminal, or a separate rivet terminal may be provided on the other bottom surface of the battery can that functions as a positive terminal. In this way, even when the rivet terminal functions as a positive terminal, the battery cap exists as non-polar and covers one bottom surface of the battery can.

However, as described above, one bottom surface of the battery can covered by the battery cap or the other bottom surface of the battery can where the rivet terminal is formed is not formed flat, but has a predetermined groove. This is because the end of the battery can is bent to secure the battery can, and the rivet terminal protrudes.

Therefore, when accommodating a battery cell in a pack case of a battery pack, it is difficult for the bottom of the battery cell to come into close contact with the bottom of the pack case including the cooling plate, which may reduce the cooling efficiency of the battery cell.

### [SUMMARY OF THE INVENTION]

### [TECHNICAL PROBLEM]

The present invention provides a bottom cover capable of stably supporting one bottom surface of a battery cell while improving the cooling efficiency of the battery cell, and a battery pack and a vehicle including the same.

However, the technical problems to be solved by the present invention are not limited to those set forth above, and other problems not expressly mentioned will be clearly understood by those of ordinary skill in the art from the following description.

### [SOLUTION TO THE PROBLEM]

A bottom cover according to an embodiment of the present invention for solving the above-described problem is for supporting one bottom surface of a battery cell, and the bottom cover includes a flat cover lower portion and a cover upper portion having a raised pattern formed thereon, facing one bottom surface of the battery cell and protruding in the direction of the battery cell.

The bottom cover may be made of a material including one or more of copper and aluminum.

Additionally, the bottom cover may be coated with epoxy.

Additionally, the raised pattern may include a circle.

Meanwhile, the present invention is a battery pack, comprising a battery cell including a battery case having a groove formed on one bottom surface and an electrode assembly accommodated in the battery case, a pack case accommodating at least one battery cell, and a bottom cover interposed between one bottom surface of the battery cell and a bottom portion of the pack case to support the battery cell. And the bottom cover includes a cover lower portion facing the bottom portion of the pack case, and a cover upper portion facing one bottom surface of the battery cell and having a raised pattern formed thereon that protrudes in the direction of the battery cell.

At least a portion of a groove formed on one bottom surface of the battery case of the battery cell may be configured so that a raised pattern formed on the cover upper portion of the bottom cover is inserted thereinto.

The cover lower portion facing the bottom portion of the pack case may be formed flat.

The bottom cover may be made of a metal material having a thermal conductivity higher than or equal to that of the battery case of the battery cell.

For example, the bottom cover may be made of a material including one or more of copper and aluminum.

Additionally, the bottom cover may be insulation-coated.

For example, the bottom cover may be coated with epoxy.

The raised pattern formed on the cover upper portion of the bottom cover may include a circle.

Additionally, a cooling path may be formed at the bottom portion of the pack case.

Additionally, thermal interface materials (TIM) may be interposed between the bottom portion of the pack case and the bottom cover.

In addition, the present invention provides a vehicle comprising at least one battery pack according to the foregoing embodiment.

### [ADVANTAGEOUS EFFECTS OF THE INVENTION]

According to the present invention, it is possible to stably support one bottom surface of a battery cell while improving the cooling efficiency of the battery cell.

However, the advantageous effects of the present invention are not limited to those described above, and other technical effects not explicitly mentioned will be clearly understood by those of ordinary skill in the art from the following description.

### [BRIEF DESCRIPTION OF DRAWINGS]

FIG. 1 is a perspective view of a bottom cover according to one embodiment of the present invention.
FIG. 2 is a plan view of the bottom cover of FIG. 1.
FIG. 3 is a longitudinal cross-sectional view of the bottom cover of FIG. 1.
FIG. 4 is a perspective view illustrating a battery cell supported by the bottom cover of FIG. 1.
FIG. 5 is a longitudinal cross-sectional perspective view of the battery cell of FIG. 4.
FIG. 6 is a view showing a state in which a bottom cover supports a battery cell according to an embodiment of the present invention.
FIG. 7 is an enlarged longitudinal cross-sectional view of a portion of a battery pack including a bottom cover according to an embodiment of the present invention.

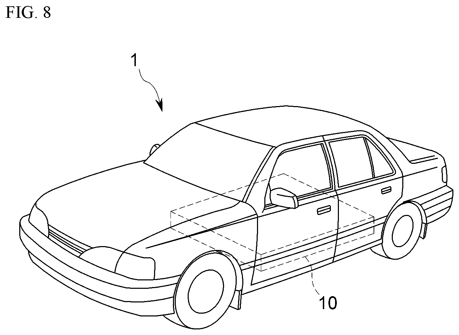

FIG. 8 is a view illustrating a vehicle including the battery pack of FIG. 7.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed below, but may be implemented in various other forms. The embodiments are provided merely to ensure a complete disclosure of the present invention and to fully inform those skilled in the art of the scope of the invention. The present invention is defined only by the scope of the appended claims. Therefore, in some embodiments, well-known process steps, well-known device structures, and well-known technologies are not described in detail to avoid obscuring the present invention. Throughout the specification, like reference numerals refer to like elements.

In the drawings, the thicknesses of layers and regions are exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. Conversely, when a part is referred to as being "directly on" another part, it is to be understood that there is no other part in between. Similarly, when an element is referred to as being "under" another element, it can be directly under the other element or intervening elements may be present. Conversely, when a part is referred to as being "directly under" another part, it is to be understood that there is no other part in between.

Throughout this specification, unless the context dictates otherwise, each component may be singular or plural.

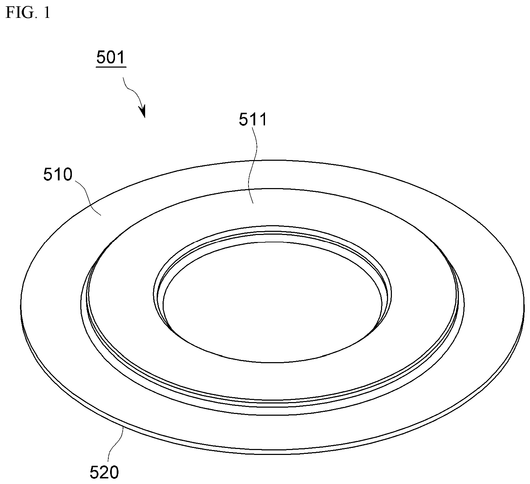

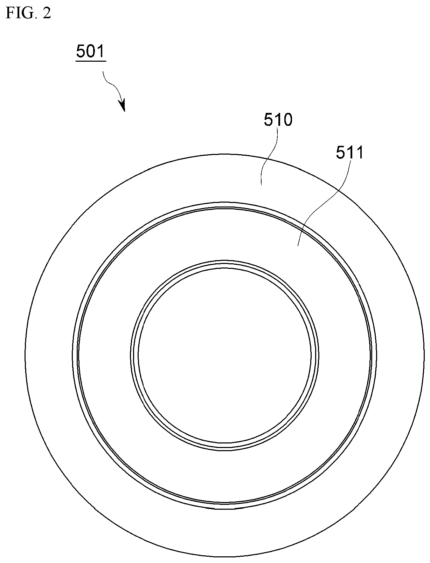

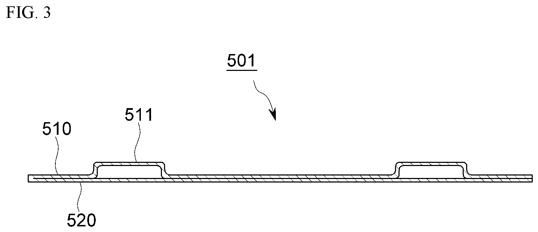

FIGS. 1 to 3 are views illustrating a bottom cover (501) according to an embodiment of the present invention. FIG. 1 is a perspective view of the bottom cover (501), FIG. 2 is a plan view of the bottom cover (501), and FIG. 3 is a longitudinal cross-sectional view of the bottom cover (501).

A bottom cover (501) according to an embodiment of the present invention supports one bottom surface of a battery cell (101) to be described later. For example, the bottom cover (501) can support the lower surface of the battery cell (101).

Referring to FIGS. 1 to 3, a bottom cover (501) according to an embodiment of the present invention includes a cover lower portion (520) and a cover upper portion (510).

The cover lower portion (520) is formed flat and faces the bottom portion (25) of the pack case (20) of the battery pack (10) to be described later. In this way, the cover lower portion (520) can be formed flat to secure a wide contact area.

The cover upper portion (510) faces one bottom surface of the battery cell (101) to be described later, and a raised pattern (511) protruding in the direction of the battery cell (101) is formed thereon. Here, one bottom surface may be the lower surface of the battery cell (101).
or example, the raised pattern (511) formed on the cover upper portion (510) may include a circle. However, in an embodiment of the present invention, the raised pattern (511) is not limited to a circle, and the raised pattern (511) may be formed in a shape corresponding to a groove formed on one bottom surface of the facing battery cell (101). That is, when the bottom cover (501) supports the battery cell (101), the raised pattern (511) of the bottom cover (501) is inserted into at least a part of the groove formed on the lower surface of the battery case (400) of the battery cell (101) to fill the groove formed on the lower surface of the battery cell (101). And as the groove formed on the lower surface of the battery cell (101) is filled, the contact area of the battery cell (101) increases.

At least one bottom surface of the battery cell (101) described later may not be structurally completely flat and may have a groove. In this way, an air gap is formed due to the groove formed on one bottom surface of the battery cell (101), and as a result, the contact area is reduced, which may lower the cooling efficiency of the battery cell (101).

However, according to an embodiment of the present invention, the bottom cover (501) fills the groove formed on one bottom surface of the battery cell (101) to increase the contact area and improve cooling efficiency.

Additionally, the bottom cover (501) may be made of a metal material having a thermal conductivity higher than or equal to that of the battery case (400) of the battery cell (101). For example, the bottom cover (501) may be made of copper, aluminum, or an alloy containing these. Therefore, the bottom cover (501) in contact with the lower surface of the battery cell (101) improves the cooling efficiency of the battery cell (101).

Additionally, the bottom cover (501) may be insulation-coated. For example, the bottom cover (501) can be coated with epoxy. Accordingly, the bottom cover (501) can, if necessary, insulate the battery case (400) of the battery cell (101) to be described later and the pack case (20) of the battery pack (10) to be described later from each other.

According to this configuration, the bottom cover (501) according to an embodiment of the present invention can stably support one bottom surface of the battery cell (101) while improving the cooling efficiency of the battery cell (101). Additionally, the bottom cover (501) can insulate between one bottom surface of the battery cell (101) and the pack case (20) that accommodates the battery cell (101).

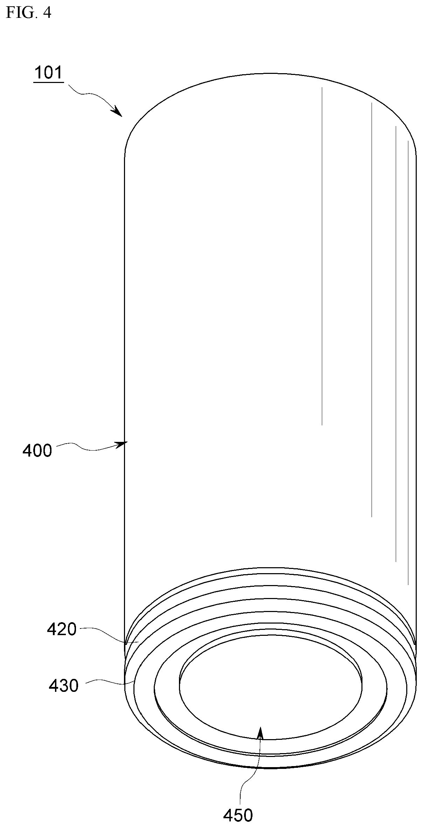

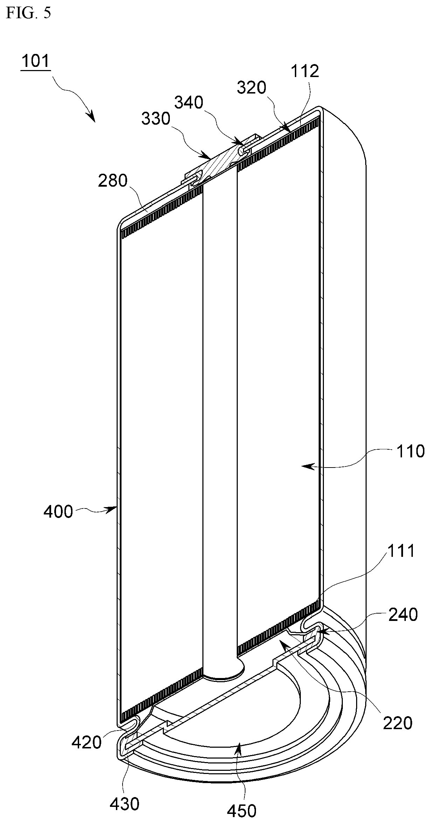

FIG. 4 and FIG. 5 are drawings for exemplarily explaining a battery cell (101) supported by a bottom cover according to an embodiment of the present invention. FIG. 4 is a perspective view of the battery cell (101), and FIG. 5 is a longitudinal cross-sectional perspective view of the battery cell (101).

Referring to FIGS. 4 and 5, the battery cell (101) may include a battery case (400), an electrode assembly (110), a cap plate (450), a sealing gasket (240), current collector plates (220 and 320), an insulating plate (280), an electrode terminal (330), and a terminal gasket (340).

The electrode assembly (110) comprises a first electrode having a first polarity, a second electrode having an opposite polarity, and a separator disposed between the first electrode and the second electrode. For example, the first electrode may be either an anode or a cathode, and the second electrode may correspond to an electrode having a polarity opposite to that of the first electrode.

The electrode assembly (110) may have a structure in which the first electrode, the second electrode, and the separator interposed therebetween are wound in a single direction. The electrode assembly (110) may have, for example, a jelly roll structure. That is, the electrode assembly (110) may be manufactured by winding a laminate formed by stacking a sheet-type first electrode current collector and a sheet-type second electrode current collector with a separator interposed therebetween, at least once, in one direction about a winding center. However, the embodiment of the present invention is not limited to the foregoing description, and any jelly-roll structure known to those skilled in the art may be applied without limitation.

The first electrode comprises a first electrode current collector and a first electrode active material coated on one or both surfaces of the first electrode current collector. At one end in the width direction of the first electrode current collector, a first uncoated portion (111) is provided where the first electrode active material is not coated. The first uncoated portion (111) can function as a first electrode tab. The first uncoated portion (111) is disposed at a lower part, in the height direction, of the electrode assembly (110) accommodated in the battery case (400). That is, the first electrode current collector includes a first uncoated portion (111) that is not coated with an active material layer on its long-side end and is exposed outside the separator, and a portion of the first uncoated portion (111) itself functions as an electrode tab. For example, in this specification, the first electrode may be a negative electrode, and the first uncoated portion (111) may serve as a negative electrode tab.

The second electrode comprises a second electrode current collector and a second electrode active material layer coated on one or both surfaces of the current collector. At the opposite end of the second electrode current collector in the width direction, a second uncoated portion (112) is provided where the second electrode active material is not coated. The second uncoated portion (112) can function as a second electrode tab. The second uncoated portion (112) is disposed at an upper part, in the height direction, of the electrode assembly (110) accommodated in the battery case (400). That is, the second electrode current collector includes a second uncoated portion (112) that is not coated with an active material layer on its long-side end and is exposed outside the separator, and at least a portion of the second uncoated portion (112) itself serves as an electrode tab. For example, in this specification, the second electrode may be a positive electrode, and the second uncoated portion (112) may serve as a positive electrode tab.

The first uncoated portion (111) and the second uncoated portion (112) may extend in mutually opposite directions along the height direction of the cylindrical battery cell (101). In the present invention, the positive electrode active material coated on the positive electrode plate and the negative electrode active material coated on the negative electrode plate may be employed without limitation, provided that they are active materials known to those skilled in the art.

An opening may be formed at a lower portion of the battery case (400). That is, the opening may be provided at a lower portion of the battery cell (101). The battery case (400) accommodates the electrode assembly (110) through an opening formed at a lower portion, and further accommodates an electrolyte.

Meanwhile, an electrode terminal (330), which will be described later, may be disposed on an upper surface opposite to the opening of the battery case (400). For example, in this specification, the electrode terminal (330) may be electrically connected to the second uncoated portion (112) of the second electrode, which may serve as the positive electrode. That is, the electrode terminal (330) may be a positive electrode terminal.

Specifically, the battery case (400) includes a circular bottom portion, a side portion (412) extending from the bottom portion, and a crimping portion (430) formed by bending an end of the side portion (412) inward.

Additionally, the battery case may further comprise a beading portion (420) formed by inwardly pressing the side portion (412) adjacent to the crimping portion (430).

The crimping portion (430) may be bent and extended inward of the battery case (400) so as to wrap around and secure an edge of the cap plate (450) together with the sealing gasket (240) described later.

Specifically, the crimping portion (430) can be formed in the lower area of the battery case (400). The crimping portion (430) may be bent and extended inward from a lower periphery of the battery case (400) along a radial direction of the cylindrical battery cell (101). The crimping portion (430) is disposed in an area corresponding to an edge circumference of the cap plate (450) to be described later, and secures the cap plate (450), thereby preventing the cap plate (450) from being detached downward.

Additionally, when the battery case (400) is provided with a beading portion (420), the crimping portion (430) may be formed below the beading portion (420). The crimping portion (430) extends from the beading portion (420) and is bent and extended so as to surround an outer surface of the cap plate (450) placed under the beading portion (420), as well as a portion of a lower surface of the cap plate (450). A lower end of the crimping portion (430) may extend inward by a predetermined distance along a radial direction of the cylindrical battery cell (101) and wrap around a portion of a lower surface of the cap plate (450). In this way, the crimping portion (430) secures the periphery of the edge of the lower surface of the cap plate (450). That is, an area around an edge of the cap plate (450) is interposed between a lower end of the crimping portion (430) and the beading portion (420), and is fixed to the battery case (400) so as to cover an opening of the battery case (400).

Additionally, the crimping portion (430) may be formed so as to wrap a portion of the first current collector plate (220), to be described later, together with an edge of the cap plate (450).

The beading portion (420) can be formed by pressing the outer circumference of the battery case (400) inward. That is, the beading portion (420) has a recessed shape to a predetermined depth along a radial direction from an outer surface of the battery case (400), and extends in a circumferential direction of the battery case (400). The beading portion (420) prevents the electrode assembly (110), having a size corresponding to a width of the battery case (400), from being released through a lower opening of the battery case (400), and may serve as a support portion on which the cap plate (450) is mounted.

The cap plate (450) has an edge crimped by the crimping portion (430) of the battery case (400) so as to cover an open end of the battery case (400).

In other words, the cap plate (450) constitutes one surface of the battery cell (101), namely the bottom surface of the battery case (400).

For example, the cap plate (450) is non-polar and may be made of a metal material to ensure rigidity. That is, even if the cap plate (450) is made of a conductive metal material, it may not have polarity. In other words, the cap plate (450) may be electrically insulated from the battery case (400), which functions as a negative terminal, and from the electrode terminal (330), which functions as a positive terminal.

Accordingly, the cap plate (450) need not be electrically connected to the electrode assembly (110) or the battery case (400), and its material is not necessarily required to be a conductive metal.

Meanwhile, the edge of the cap plate (450) can be surrounded by a sealing gasket (240) to be described later and placed on the beading portion (420).

The sealing gasket (240) is crimped together with an edge of the cap plate (450) by the crimping portion (430) of the battery case (400), thereby sealing the battery case (400). In this case, the sealing gasket (240) may be bent together with the bent shape of the crimping portion (430) of the battery case (400). When the battery case (400) includes a beading portion (420), a sealing gasket (240) may be disposed between a lower surface of the beading portion (420) and a lower end of the crimping portion (430).

Accordingly, the sealing gasket (240) is interposed between the cap plate (450) and the crimping portion (430) of the battery case (400) to seal an open lower end of the battery case (400) and to electrically insulate the battery case (400) from the cap plate (450). Accordingly, the sealing gasket (240) may be formed of a material having insulating and elastic properties, and may comprise a polymer resin.

For example, the sealing gasket (240) may comprise one or more heat-resistant resins selected from the group consisting of polypropylene (PP), polyethylene (PE), polyimide (PI), polycarbonate (PC), polybutylene terephthalate (PBT), and polystyrene (PS).

Additionally, the battery case (400) may be electrically connected to the electrode assembly (110). The battery case (400) may be, for example, electrically connected to the first uncoated portion (111) of the electrode assembly (110). In this case, the battery case (400) may have the same polarity as the first uncoated portion (111). For example, the battery case (400) can function as a negative terminal.

The electrode terminal (330) may have a riveting structure. Specifically, the electrode terminal (330) can be riveted through a through hole formed in the bottom surface of the battery case (400). Furthermore, a terminal gasket (340) can be provided between the electrode terminal (330) and the outer diameter of the through-hole.

The electrode terminal (330) can be electrically connected to the second uncoated portion (112) of the electrode assembly (110). In this case, the electrode terminal (330) may have the same polarity as the second uncoated portion (112). or example, the electrode terminal (330) can function as a positive electrode terminal.

The current collector plates (220 and 320) may comprise a first current collector plate (220) that electrically connects the first uncoated portion (111) of the electrode assembly (110) to the battery case (400), and a second current collector plate 320 that electrically connects the second uncoated portion (112) of the electrode assembly (110) to the electrode terminal (330).

Specifically, one end of the first current collector plate (220) may be interposed between the sealing gasket (240) and the beading portion (420) to contact the beading portion (420), while the other end of the first current collector plate (220) may contact the first uncoated portion (111) of the electrode assembly (110). In this case, one end of the first current collector plate (220) may be pressed and fixed together with an edge of the cap plate (450) when an end of the crimping portion (430) of the battery case (400) is bent so as to press into the sealing gasket (240).

An insulating plate (280) is interposed between the second current collector plate 320 and the battery case (400) to prevent the second current collector plate 320 from being electrically connected to the battery case (400).

Meanwhile, in an embodiment of the present invention, the vertical orientation of the battery cell (101) may be varied as desired depending on the form in which the battery cell (101) is accommodated in the battery pack (10) to be described later. That is, as shown in FIGS. 4 and 5, the electrode terminal (330) is arranged to face upward and the cap plate (450) to face downward; however, the arrangement of the battery cell (101) is not limited thereto, and the electrode terminal (330) may alternatively face downward with the cap plate (450) facing upward.

As described above, at least one bottom surface of the battery cell (101) is not flat and a groove is formed. For example, the crimping portion (430) of the battery case (400) has a bent and extended shape to surround the outer surface of the cap plate (450) and a portion of the lower surface of the cap plate (450). Therefore, the bottom surface where the cap plate (450) is located has a circular groove. Additionally, the bottom surface where the electrode terminal (330) is located is not formed flat due to the protrusion of the electrode terminal (330).

That is, it is preferable that the raised pattern (511) formed on the bottom cover (501) according to an embodiment of the present invention has a shape corresponding to a groove formed on the lower surface of the battery cell (101) depending on the arrangement of the battery cell (101). In FIG. 1, the case where the raised pattern (511) of the bottom cover (501) is circular is exemplified, but an embodiment of the present invention is not limited to this.

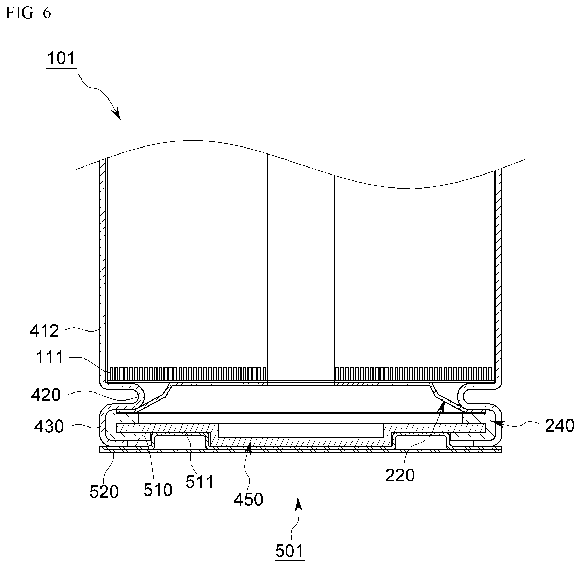

FIG. 6 exemplarily shows a form in which a bottom cover (501) supports a battery cell (101) according to an embodiment of the present invention.

As illustrated in FIG. 6, the bottom cover (501) may include a cover lower portion (520) facing the bottom portion (25) of the pack case (20) to be described later, and a cover upper portion (510) facing one bottom surface of the battery cell (101) and having a raised pattern (511) formed thereon that protrudes in the direction of the battery cell (101).

And, a raised pattern (511) formed on the cover upper portion (510) of the bottom cover (501) can be inserted into at least a part of the groove formed on the lower surface of the battery case (400) of the battery cell (101). At this time, the cover lower portion (520) facing the bottom portion (25) of the pack case (20) to be described later can be formed flat. Accordingly, the bottom cover (501) increases the contact area of the lower surface of the battery cell (101) and helps to ensure good heat transfer between the bottom portion (25) of the pack case (20) of the battery pack (10) described later or the thermal interface materials (TIM) 24 and the battery cell (101).

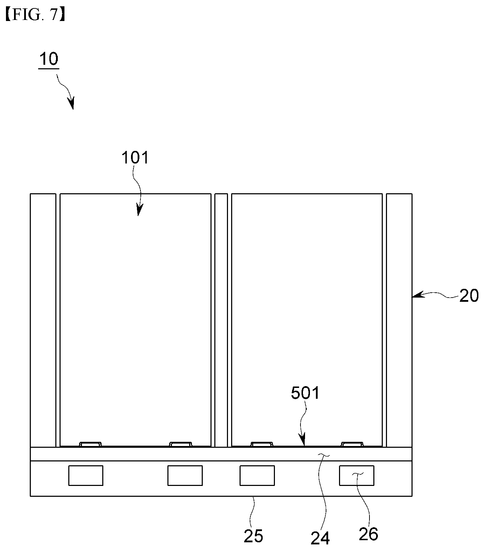

FIG. 7 is an enlarged view of a portion of a battery pack (10) to explain the battery pack (10) including the bottom cover (501).

Referring to FIG. 7, a battery pack (10) according to an embodiment of the present invention may include at least one battery cell (101) described above and a bottom cover (501) supporting the same. In addition, the battery pack (10) according to the present invention may comprise a pack case (20) configured to accommodate at least one battery cell (101) and a bottom cover (501).

As described above, the battery cell (101) may include a battery case (400) having a groove formed on the lower surface, and an electrode assembly (110) accommodated in the battery case (400).

As described above, the bottom cover (501) can be interposed between one bottom surface of the battery cell (101) and the bottom portion (25) of the pack case (20) to support the battery cell (101).

Additionally, a cooling path (26) can be formed in the bottom portion 24 of the pack case (20). As the coolant moves through these cooling paths (26), it dissipates the heat generated in the battery cells 101. That is, the heat transferred from the battery cell (101) to the bottom portion (25) of the pack case (20) through the bottom cover (501) can be effectively dissipated through the cooling path (26).

Additionally, a thermal interface material (TIM) 24 may be interposed between the bottom portion (25) of the pack case (20) and the bottom cover (501). Accordingly, the heat generated from the battery cell (101) can be managed more effectively.

Furthermore, in addition to the battery cell (101), the battery pack (10) may further include various other components known at the time of filing of the present invention, such as a battery management system (BMS), a battery disconnect unit (BDU), a relay, and a current sensor.

FIG. 7 is a view illustrating a vehicle (1) including the battery pack (10) of FIG. 6.

Referring to FIG. 7, a vehicle (1) according to the present invention may include at least one battery pack (10) according to the present invention.

The battery pack (10) according to the present invention can be applied to a vehicle (1) such as an electric vehicle or a hybrid vehicle. That is, a vehicle (1) according to the present invention may include a battery pack (10) according to the present invention. In addition, a vehicle (1) according to the present invention may further include various other components included in the vehicle in addition to a battery pack (10) For example, the vehicle (1) according to the present invention may further include, in addition to the battery pack (10), a vehicle body, a motor, and a control device such as an electronic control unit (ECU).

Although operations are illustrated in the drawings in a particular order, it should not be construed that the operations must be performed in the depicted order or in any sequential order, nor that all of the depicted operations must necessarily be performed to achieve the desired result.

The foregoing description is merely illustrative of the technical idea of the present embodiment, and those skilled in the art to which the present embodiment pertains will be able to make various modifications and alterations without departing from the essential characteristics of the present embodiment. Accordingly, these embodiments are not intended to limit the technical idea of the present invention but rather to illustrate it, and the scope of the technical idea of the present invention is not restricted to these embodiments. The scope of protection of the present embodiment shall be interpreted on the basis of the claims below, and all technical ideas falling within an equivalent scope shall be construed as being included within the scope of rights of the present embodiment.

### [INDUSTRIAL APPLICABILITY]

The present invention can be used to provide a bottom cover capable of stably supporting one side of a battery cell while improving the cooling efficiency of the battery cell, and a battery pack and a vehicle including the same.

## Claims

1. A bottom cover for supporting one bottom surface of a battery cell, the bottom cover comprising:
a flat cover lower portion; and
a cover upper portion having a raised pattern formed thereon, the cover upper portion facing one bottom surface of the battery cell and the raised pattern protruding
in a direction of the battery cell.

2. The bottom cover of claim 1, wherein
the bottom cover is made of a material comprising at least one of copper and aluminum.

3. The bottom cover of claim 1, wherein
the bottom cover is coated with epoxy.

4. The bottom cover of claim 1, wherein
the raised pattern includes a circular shape.

5. A battery pack comprising: a battery cell including a battery case having a groove formed on one bottom surface thereof and an electrode assembly accommodated in the battery case;
a pack case accommodating at least one said battery cell; and
a bottom cover interposed between one bottom surface of the battery cell and a bottom portion of the pack case to support the battery cell,
wherein
the bottom cover includes:
a cover lower portion facing the bottom portion of the pack case; and
a cover upper portion having a raised pattern formed thereon, the cover upper portion facing one bottom surface of the battery cell and the raised pattern protruding
in a direction of the battery cell.

6. The battery pack of claim 5, wherein
at least a portion of the groove formed on one bottom surface of the battery case of the battery cell is configured such that the raised pattern formed on the cover upper portion of the bottom cover is inserted thereinto.

7. The battery pack of claim 5, wherein
the cover lower portion facing the bottom portion of the pack case is formed flat.

8. The battery pack of claim 5, wherein
the bottom cover is made of a metal material having a thermal conductivity equal to or higher than that of the battery case of the battery cell.

9. The battery pack of claim 5, wherein
the bottom cover is made of a material comprising at least one of copper and aluminum.

10. The battery pack of claim 5, wherein
the bottom cover is insulation-coated.

11. The battery pack of claim 5, wherein
the bottom cover is coated with epoxy.

12. The battery pack of claim 5, wherein
the raised pattern formed on the cover upper portion of the bottom cover includes a circular shape.

13. The battery pack of claim 5, wherein
a cooling path is formed in the bottom portion of the pack case.

14. The battery pack of claim 5, wherein
a thermal interface material (TIM) is interposed between the bottom portion of the pack case and the bottom cover.

15. A vehicle comprising at least one battery pack according to any one of claims 5 to 14.
